# EUROPÄISCHE PATENTANMELDUNG

(11) **EP 0 870 892 A2**
(43) Veröffentlichungstag der Anmeldung: **14.10.1998**
(21) Anmeldenummer: 98200947.4
(22) Anmeldetag: 26.03.1998
(51) Int. Cl.: E05F 15/00, B60J 7/00, B60J 10/00

(54) **Vorrichtung zur Einklemmerkennung und Verwendung bei einem Schiebedach**

(30) Priorität: 10.04.1997 LU 90049
(71) Anmelder: I.E.E. International Electronics & Engineering S.à.r.l., L-2632 Luxembourg (LU)
(72) Erfinder: Lehnen, Hans Günter, 66687 Wadern-Noswendel (DE); Lorig, Roland, 54675 Sinspelt (DE)
(74) Vertreter: Meyers, Ernest

(57) **Zusammenfassung**

De Vorrichtung ist für ein kraftbetätigtes mit einem Dichtelement (14) versehenen Schließelement (8), wie z.B. ein Schiebedach eines KFZ bestimmt. In der PU-Umschäumung (7) des Schließelementes sitzt ein Schaltelement (10) zur Erkennung der Einklemmung bei Schiebebewegung und ein Schaltelement (9) zur Erkennung der Einklemmung bei Klappbewegung.

## Beschreibung

Die vorliegende Erfindung betrifft eine Vorrichtung zur Einklemmerkennung bei einem fernkraftbetätigten Schließelement. Derartige Vorrichtungen werden eingesetzt, um im Falle einer Einklemmung, z.B. eines Gegenstandes oder Körperteiles zwischen zwei sich gegenüberliegenden Schließkanten, die Antriebseinheit des Schließelementes anzuhalten und umzukehren. Zum Einsatz kommen diese Einklemmsicherungen bei elektrisch betätigten Fernsterhebern, automatisch schließenden Türen, z.B. Bussen, Bahnen oder Fahrstühlen, aber auch in Schiebedächern.

Die bekannten Vorrichtungen zur Einklemmerkennung basieren im wesentlichen auf zwei unterschiedlichen Funktionsweisen.

Bei einer ersten Art von Einklemmsicherungen wird die Informationen über eine mögliche Einklemmung aus den Leistungsdaten der Antriebseinheit für das Schließelement entnommen, ggf. in Verbindung mit den Positions- und Geschwindigkeitsdaten des Schließelementes. Dies geschieht bei elektrischen Antrieben zum Beispiel durch die Überwachung des Motorstromes oder des vom Motor abgegebenen Drehmomentes, welche beide im Falle einer Einklemmung ansteigen. Zusätzlich kann über eine Auswertung der Motorumdrehungen und/oder der Drehzahl die Positions und/oder Geschwindigkeitsinformation zur Hinderniserkennung ausgewertet werden. Bei Über- oder Unterschreiten bestimmter Schwellwerte der jeweils abgefragten Parameter wird die Antriebseinheit abgeschaltet und gegebenenfalls die Bewegungsrichtung umgekehrt. Probleme entstehen bei diesen Systemen insbesondere durch Reibungsverluste des Schließelementes an Führungsvorrichtungen und Dichtelementen für das Schließelement. Diese Reibungsverluste sind stark abhängig von äußeren Faktoren wie z.B. Aussentemperatur, Schmierungszustand oder Verschmutzungsgrad, was dazu führt, daß die überwachten Parameter stark variieren und es häufig zu Fehlauslösungen kommt.

Bei einer zweiten Art von Einklemmsicherung werden druckbetätigte Schaltelemente verwendet, die an einer Schließkante angeordnet sind und bei Druckbeaufschlagung die Antriebseinheit des Schließelementes abschalten bzw. umkehren. Die LU-A-87 942 beschreibt zum Beispiel eine Einklemmsicherung, bei der ein Foliendrucksensor an der Schließkante des Schließelementes angebracht wird. Hierbei wird in erster Linie ein Schließelement beschrieben, welches nur Bewegungen in einer Bewegungsrichtung, vorzugsweise parallel zur gegenüberliegenden Schließkante und in einer linearen Bewegung vollführt. Befindet sich ein Hindernis in der Bewegungsbahn des Schließelementes wird der Foliendrucksensor beim Auftreffen des Hindernisses durch eine direkte Druckbeaufschlagung ausgelöst und die Antriebssteuerung des Schließelementes kehrt die Bewegungsrichtung des Schließelementes um.

Aufgabe der vorliegenden Erfindung ist es, eine komplexe Vorrichtung zur Einklemmerkennung aufzuzeigen, mit der unzulässige Dauerbelastungen des Schaltelementes bei geschlossenem Schließelement vermieden werden können, die ein allzu direktes und ungedämpftes Übertragen der Einklemmkraft auf das Schaltelement verhindern kann, welche vorzugsweise an PU-umschäumten Schließelementen wie Schiebedächern und in Verbindung mit am Schließelement angebrachtem Dichtelement eingesetzt werden kann und typische Einklemmfälle zuverlässig erkennt, wie sie bei Schiebedächern sowohl in der Schließbewegung aus horizontaler Geöffnet-Stellung als auch in der vertikalen Klappstellung entstehen können. Desweiteren soll die nachfolgend beschriebene Erfindung die Verwendung eines um das Schließelement umlaufenden Dichtprofiles ermöglichen, welches durch seinen Aufbau so ausgestaltet ist, daß es durch gezielte Veränderung des Querschnittes mittels Beschneidungstechnik optimal auf die Anordnung der Schließkante abgestimmt werden kann.

Zur Lösung dieser Aufgabe schlägt die Erfindung eine Vorrichtung gemäß Anspruch 1 vor und eine Anwendung gemäß Anspruch 5 vor.

Weitere Merkmale und Einzelheiten der Erfindung ergeben sich aus den Unteransprüchen.

Ein vorteilhaftes Ausführungsbeispiel der Erfindung ist in den Figuren gezeigt. Es zeigen:
Figur 1: einen Längsschnitt durch die Vorderkante eines aufklappbaren Schiebedaches und
Figur 2: einen Längsschnitt durch die Hinterkante eines aufklappbaren Schiebedaches.

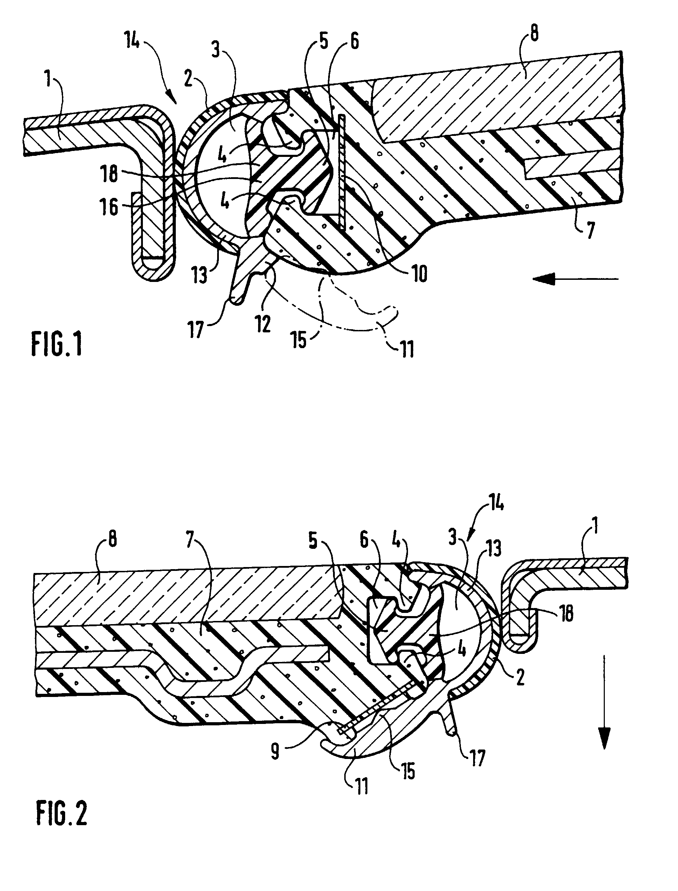

In Figur 1 und 2 handelt sich um einen mit PU 7 umschäumten Glasdeckel 8, welcher umlaufend einen Befestigungsbereich in Form einer Nut 6 mit Hinterhakungen 4 besitzt, in welchem ein Dichtungselement 14 eingeclipst werden kann. An der Vorderkante (Figur 1) ist ein Schaltelement 10 teilweise mit im PU vergossen, welches sich direkt gegenüber dem spitz ausgebildeten Fußbereich 5 des Dichtprofiles befindet. An der Hinterkante (Figur 2) ist ein weiteres Schaltelement 9 in einer Schräglage unterhalb der Dicht- bzw. Schließkante teilweise mit im PU vergossen. Die Anordnung ist hierbei jeweils auf die Schließbewegung abgestimmt - eine horizontale an der Vorderkante, eine vertikale an der Hinterkante.

Das Dichtelement 14 besteht aus 3 Funktionsbereichen und zwar:
1. der Hohlkammer 3 die mit ihrer Aussenhaut 13, welche mit einer reibmindernden Beschichtung 2 in Form von Flock, Gleitlack o.ä. ausgesstattet ist, umlaufend gegen die Schließkante 1, die hier die Fahrzeugdachkante darstellt, abdichtet und mit einer Tropfkante 17 ausgestattet ist;
2. dem Fußbereich 16, welcher so gestaltet ist, daß er in die Befestigungsnut 6 eingeknöpft werden kann und mit seinem hakenförmig gestalteten Seitenbereich verrastet, dessen spitzer Fußbereich 5 so gestaltet ist, daß er das Schaltelement 10 betätigen kann und der so gestaltet ist, daß er sich im Falle einer Einklemmung und daraus resultierender Deformation des Dichtelementes entgegen der Schließrichtung in der Befestigungsnut in Richtung des Schaltelementes bewegen kann, um diese zu betätigen;
3. dem Schutz-, Abdeck- und Betätigungsbereich 11 mit seiner Betätigungsnase 15, welcher unterhalb der Schließkante im Bereich der Tropfkante 17 anschließt.

Das Dichtelement 14 ist desweiteren so gestaltet, daß es durch entfernen des Schutz-, Abdeckungs- und Betätigungsbereiches 11 umlaufend an die sich verändernde Schließelementkante angepasst werden kann, d.h. im vorderen und seitlichen Bereich entfällt der Schutz-, Abdeckungs- und Betätigungsbereich 11, da er dort keine Funktion zu erfüllen hat. Dies ist durch die strichpunktierte Darstellung in Figur 1 dargestellt. Ebenso kennzeichnend ist, daß es aus zwei unterschiedlich nachgiebigen Bereichen, realisiert durch unterschiedliche Schorehärtegrade des Herstellungsmaterials, besteht und zwar einem weichen Bereich für die Hohlkammer und den Schutz-, Abdeck- und Betätigungsbereich 11 sowie einem harten Bereich für den Fuß- und Befestigungsbereich.

Die Wirkungsweise der Einklemmvorrichtung erklärt sich nun wie folgt:

An der Vorderkante (Figur 1) befindet sich während eines Schließvorganges ein Hindernis im Bereich der Schließkante. Die Hohlkammer wird deformiert und drückt gegen den Fußbereich 16. Dieser verschiebt sich durch die im Bereich der Hinterhakungen vorhandenen Freiräume in Richtung des Schaltelementes 10 und drückt dieses mit dem spitz ausgestalteten Fußbereich zusammen. Das dadurch entstehenden Signal wird elektronisch ausgewertet und als Reaktion wird der sofortige Stop des Schließelementes und/oder dessen Reversierung eingeleitet.

An der Hinterkante (Figur 2), an welcher das Schließelement eine vertikale Schließbewegung vollführt, da dieses beim Öffnen nach oben klappt, befindet sich ein Hindernis im Bereich der Schließkante. Da im Falle einer Einklemmung durch die Bewegung des Schließelementes eine Scherung stattfindet, wird nicht die Hohlkammer deformiert, sondern die Tropfkante 17 verbogen und das Hindernis kommt gegen den Schutz-, Abdeck- und Betätigungsbereich 11 zum Anliegen. Da dieser aus einem nachgiebigen Material gefertigt ist, wird dieser so deformiert, daß die Betätigungsnase 15 gegen das Schaltelement 9 gedrückt wird und dieses betätigt. Das dadurch entstehende Signal wird elektronisch ausgewertet und als Reaktion wird der sofortige Stop des Schließelementes und/oder dessen Reversierung eingeleitet.

Das Dichtelement 14 enthält vorzugsweise einen dehnungsarmen Zugträger 18, der bei der Montage eine Dehnung des Dichtelementes 14 verhindert.

## Patentansprüche

1. Vorrichtung zur Einklemmerkennung an einem kraftbetätigten Schließelement, vorzugsweise verwendet an PU-umschäumten Schließelementen (8) und in Verbindung mit einem am Schließelement (8) angebrachten Dichtelement (14), dadurch gekennzeichnet, daß das Dichtelement (14) neben der eigentlichen Dichtfunktion auch die Funktion eines Abdeck- Schutz- und Betätigungselementes eines Schaltelementes (9, 10) übernimmt, daß das Schaltelement (9, 10) in der PU-Umschäumung (7) des Schließelementes (8) untergebracht ist und daß das Dichtelement (14) so ausgestaltet ist, daß dieses zwei Kraftübertragungsbereiche (5, 15) besitzt die jeweils so angeordnet sind, daß diese optimal über dem jeweiligen Schaltelement (10, 9) angeordnet sind.

2. Vorrichtung nach Anspruch 1, dadurch gekennzeichnet, daß das Dichtelement (14) durch gezieltes Abtrennen des Abdeck-Schutz- und Betätigungsbereiches (11) den Einklemmsituationen an Vorder- und Hinterkante angepasst werden kann.

3. Vorrichtung nach Anspruch 1, dadurch gekennzeichnet, daß das Dichtelement (14) aus Bereichen unterschiedlicher Shorehärtegrade besteht, welche in ihrer Anordnung optimal auf die Funktionsansprüche Dichten der Schließkante (1) und Betätigen der Schaltelement (9, 10) abgestimmt sind.

4. Vorrichtung nach Anspruch 3, dadurch gekennzeichnet, daß das Dichtelement (14) einen dehnungsarmen Zugträger (18) besitzt, der bei der Montage eine Dehnung des Dichtelementes (14) verhindert.

5. Anwendung einer Vorrichtung gemäß einem der Patentansprüche 1 bis 4 bei einem Schiebedach eines Kraftfahrzeuges.

6. Anwendung nach Anspruch 5, dadurch gekennzeichnet, daß das Schiebedach aufklappbar ist.

7. Anwendung nach Anspruch 6, dadurch gekennzeichnet, daß ein erstes Schaltelement (10) die Einklemmung bei Schiebebewegung erkennt und daß ein zweites Schaltelement (9) die Einklemmung bei Klappbewegung erkennt.
